# EUROPEAN PATENT SPECIFICATION

(11) **EP 3 630 871 B1**
(45) Date of publication and mention of the grant of the patent: **13.03.2024**
(21) Application number: 18730532.1
(22) Date of filing: 16.05.2018
(51) Int. Cl.: C08G 77/448, A43B 5/00, A63C 5/12, A63B 37/06, C08L 83/10, A63B 59/54, C08G 64/18

(54) **SPORTS EQUIPMENT COMPRISING SILICONE POLYCARBONATE ELASTOMER**
SPORTAUSRÜSTUNG MIT SILIKON-POLYCARBONAT-ELASTOMER
ÉQUIPEMENT SPORTIF COMPRENANT UN ÉLASTOMÈRE DE POLYCARBONATE SILICONE

(30) Priority: 22.05.2017 US 201762509247 P
(43) Date of publication of application: 08.04.2020
(73) Proprietor: SHPP Global Technologies B.V., 4612 PX Bergen op Zoom (NL)
(72) Inventor: GALLUCCI, Robert Russell, Mt. Vernon, Indiana 47620-9367 (US); LOWERY, Daniel Francis, Mt. Vernon, Indiana 47620-9367 (US)
(74) Representative: Balder IP Law, S.L.
(86) International application number: PCT/US2018/032884
(87) International publication number: WO 2018/217507

(56) References cited:
- JP-A- H10 245 711
- US-A1- 2005 143 525
- US-A1- 2005 154 138
- US-A1- 2010 151 968

## Description

### BACKGROUND

The present disclosure relates to improved sports equipment, for example balls for sports such as soccer and golf and athletic footwear.

Certain sports equipment, such as racquets, sticks, and balls for sports such as soccer, football, softball, squash, tennis, handball, cricket, lacrosse, and golf and shoes for volleyball and basketball have an elastomeric component. While there are a wide variety of elastomers available for use in equipment, there remains an ongoing need in the art for elastomers with specific properties. It would be particularly useful if the properties could be tailored to each sport as desired.

US2005/154138A1 discloses a golf ball having a layer formed from a polycarbonate/polyester copolymer, which itself can be used with, or even replaced by, a siloxane polycarbonate block copolymer.

### SUMMARY

Disclosed herein is a sports equipment article comprising a poly(carbonate-siloxane) elastomer in accordance with the wording of claim 1.

The invention is further illustrated by the following Disclosure, Examples, and Claims.

### DETAILED DESCRIPTION

It has been found by the inventors hereof that thermoplastic poly(carbonate-siloxane) elastomers, particularly poly(carbonate-siloxane) elastomer resins having 50 to 90 weight percent (wt%) silicone content and whose siloxane blocks comprise 10 to 80 units, are useful in the manufacture of sports equipment for a wide variety of activities. The poly(carbonate-siloxane) elastomers exhibit an advantageous combination of elastomeric behavior and good mechanical properties, such as softness. The low glass transition of the poly(carbonate-siloxane) elastomer allows elastomeric recovery to be maintained across a wide range of temperatures, even well below freezing. In addition the poly(carbonate-siloxane) elastomers have a surprisingly nonslip, high traction surface making them, in combination with their high recoverable elasticity, a good fit for footwear applications. The properties can further be adjusted to meet the requirements of the particular article or sport.

The elastomeric nature of the resin and its high elastic recovery make it useful in any article involving energy transfer, particularly articles for sports in which a ball or other projectile is struck, such as golf, baseball, tennis, handball, squash, racketball, badminton, and hockey. The same resin features make the poly(carbonate-siloxane) elastomer useful in other articles, for example in safety equipment designed to manage energy absorption, such as helmets, shoulder pads, knee pads, and the like. The poly(carbonate-siloxane) elastomer is also useful in footwear and components thereof, for example, sneakers, boots, and insoles. In some embodiments, the poly(carbonate-siloxane) elastomer constitutes only a portion of the sports article. The elastomer can be present in the article as a solid, film, or foam.

The elastomers are especially useful in fasteners, balls, or in equipment for energy transfer from the sport article to the environment, for example equipment that is used to strike a ball or other projectile. Such articles are especially benefited by the elastic recovery of the poly(carbonate-siloxane) elastomers. In another advantageous feature, the low glass transition temperature (Tg) of the poly(carbonate-siloxane) elastomers make them especially useful in equipment for cold weather sports , such as skiing, ice fishing, skating, hockey and other winter sports, as further described below.

The thermoplastic nature of the poly(carbonate-siloxane) elastomers allows for rapid molding of articles with no chemical curing. This allows for the molding of articles with short cycle times and no emissions. The elastomeric resin can be re-melted for further shaping and customization and can be recycled for repeated use. In addition to high elastic recovery, the poly(carbonate-siloxane) elastomers also have a very "grippy" low slip surface making them useful for handles, gloves, footwear, grips, tapes, and wrappings, and especially for footwear.

The poly(carbonate-siloxane) elastomers comprise carbonate blocks and siloxane blocks. The carbonate blocks comprise repeating structural carbonate units of formula (1) 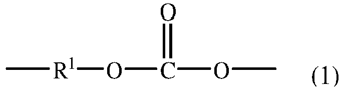 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 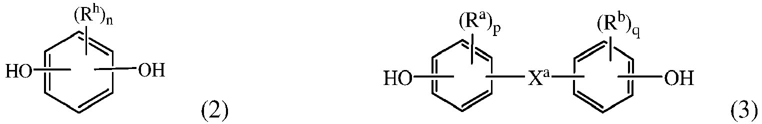 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an embodiment, p and q is each 0, or p and q is each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula - C(=R^{e})- wherein R^{e} is a divalent C₁₋₁₂ hydrocarbon group. Exemplary bisphenols include: 2,2-bis(4-hydroxyphenyl)propane (hereinafter "bisphenol-A" or "BPA"), tetrabromo bisphenol A, 2,2-bis(3,5-dimethyl-4-hydroxyphenyl)propane , 4,4'-dihydroxydiphenyl ether, resorcinol, hydroquinone, t-butyl hydroquinone,1,1 -bis(4-hydroxyphenyl)methane, 1,1-bis(4-hydroxyphenyl)ethane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)-n-butane, 2,2-bis(4-hydroxy-1-methylphenyl)propane, 1,1-bis(4-hydroxy-t-butylphenyl)propane and cyclohexyl BPA. Combinations comprising at least one of the foregoing dihydroxy compounds can also be used. Poly(carbonate-siloxane) elastomers may be linear or branched copolymers for example branched elastomer resins using: trimellitic acid, trimellitic anhydride, trimellitic trichloride, tris-p-hydroxy phenyl ethane (THPE), isatin-bis-phenol, tris-phenol TC (1,3,5-tris((p-hydroxyphenyl)isopropyl)benzene), tris-phenol PA (4(4(1,1-bis(p-hydroxyphenyl)ethyl)alpha, alpha-dimethyl benzyl)phenol), 4-chloroformyl phthalic anhydride, trimesic acid, and benzophenone tetra carboxylic acid.

Some illustrative examples of dihydroxy compounds that can be used are described, for example, in WO 2013/175448 A1, US 2014/0295363, and WO 2014/072923. In a specific embodiment, the polycarbonate units are derived from bisphenol-A. In another specific embodiment, the polycarbonate units are derived from resorcinol and bisphenol-A in a molar ratio of resorcinol carbonate units to bisphenol-A carbonate units of 1:99 to 99: 1.

The siloxane blocks comprise diorganosiloxane units of Formula (4) 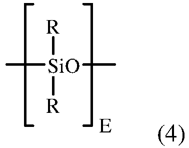 wherein each R is, independently, a C₁₋₁₃ monovalent organic group; and E has an average value of 10 to 80. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, or C₇₋₁₃ alkylarylene. The foregoing groups can be fully or partially halogenated with fluorine, chlorine, bromine, or iodine, or a combination comprising at least one of the foregoing halogens. In an embodiment, where a transparent polysiloxane-polycarbonate is, R is unsubstituted by halogen. Combinations of the foregoing R groups can be used in the same elastomer. The notation "Dn" is used herein to refer to the average number of diorganosiloxane units; for example, D45 means that the silicone blocks have an average value of E of 45.

In an embodiment, the polydiorganosiloxane blocks are of formula (5) or (6) 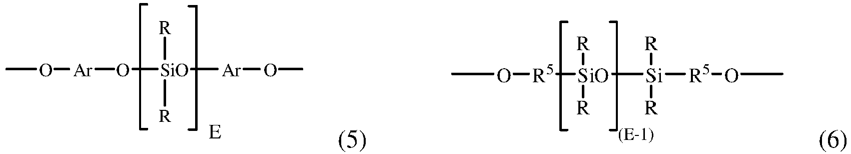 wherein E is as defined in formula (4) and each R can be the same or different, and is as defined in formula (4). In formula (5), Ar can be the same or different, and is a substituted or unsubstituted C₆₋₃₀ arylene, wherein the bonds are directly connected to an aromatic moiety. The Ar groups in formula (15) can be derived from a C₆₋₃₀ dihydroxyarylene compound, for example a dihydroxyarylene compound of formula (2) or (3) above, such as 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), tetrabromo bisphenol A, and 1,1-bis(4-hydroxy-t-butylphenyl) propane. Combinations comprising at least one of the foregoing dihydroxy compounds can also be used. In formula (6), each R⁵ is independently a divalent C₁₋₃₀ organic group, specifically a C₇₋₃₀ alkylenearylene wherein the alkylene group is attached to the silicone and the arylene. In a specific embodiment, the polydiorganosiloxane blocks are of formula (7) 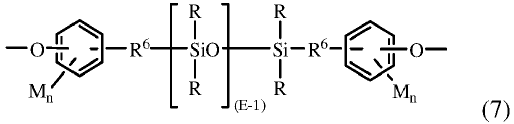 wherein Rand E are as defined in formula (4), R⁶ is a divalent C₂-C₈ aliphatic group, each M can independently be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, or C₇₋₁₂ alkylarylene and each n is independently the same or different, and is 0, 1, 2, 3, or 4. In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene, or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁-C₃ aliphatic group. Specific polydiorganosiloxane blocks are of the formulas 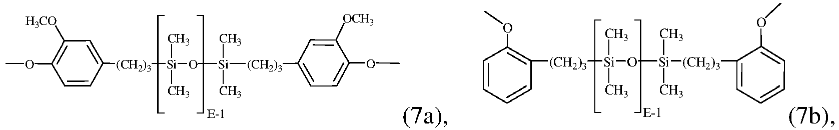 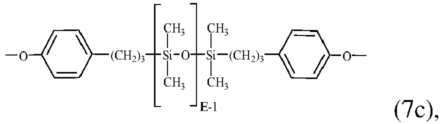 or a combination comprising at least one of the foregoing, wherein E has an average value of 10 to 80, or 10 to 70, or 10 to 60; or 20 to 80; or 20 to 70, or 30 to 60. In an embodiment, E has an average value of 10 to 60.

The poly(carbonate-siloxane) elastomers are prepared by the reaction of at least one dihydroxy-terminated-polydiorganosiloxane corresponding to formulas (5), (6), or (7) having from 10 M to 80 siloxane repeat units, at least one bisphenol of formula (3), and a carbonate precursor. Less than 20% of the carbonate linkages formed by the carbonate precursor are between the polydiorganosiloxane blocks, as determined by ¹³C NMR. The blocks comprise 50 to 90 weight percent (wt%) of the elastomer. In another embodiment, the siloxane blocks can comprise 60 to 80 wt%, or 60 to 70 wt% of the elastomer, E can have an average value of 10 to 80 or 10 to 50, and less than 10% of the carbonate linkages formed by the carbonate precursor are between polydiorganosiloxane blocks, as determined by ¹³C NMR. In any of these embodiments, the preferred polycarbonate blocks are derived from bisphenol A, and the preferred siloxane blocks are of formula (7), specifically formula (7a), (7b), or (7c).

The siloxane blocks can have a glass transition temperature of minus 130 to 50°C, or minus 130 to minus 50°C. The polycarbonate blocks can have a glass transition temperature greater than 70°C. The poly(carbonate-siloxane) elastomers can have a weight average molecular weight (M_{w}) of 10,000 to 100,000 Daltons (Da) as measured by gel permeation chromatography using polycarbonate standards.

The poly(carbonate-siloxane) elastomers can have at least 30% elongation before yield as measured by ASTM D638. In an embodiment, the poly(carbonate-siloxane) elastomers have at least 40% elongation before yield as measured by ASTM D638. The elastomer has the capability of being stretched and recovering its original shape. In most embodiments the elastomer can be stretched to at least twice its original length and very rapidly snap back to its original size. In addition to elastic recovery the high (≥50 wt%) silicone content poly(carbonate-siloxane) elastomers have a high grip, nonslip surface. This high friction nonslip surface is not observed in lower silicone polycarbonate copolymers which have a smooth slick surface and while being somewhat flexible do not have high grip to surfaces when a force is applied. The lower silicone poly(carbonate-siloxane) elastomers also do not have elastic recovery, making them less useful for sports equipment. The poly(carbonate-siloxane) elastomers can have a Shore D hardness of from 5 to 20 as measured by ASTM D2240 indicating a softer material than other low silicone content polycarbonate copolymers. In other embodiments, the poly(carbonate-siloxane) elastomers can have a percent transmission (% T) of 70% or greater, and a haze level of 10% or less, when measured at 1.0 mm thickness according to ASTM D1003. In still other embodiment, the poly(carbonate-siloxane) elastomers can have a yellowness index of 10 or less, when measured according to ASTM D6290. In any of these embodiments, the preferred polycarbonate blocks are derived from bisphenol A, and the preferred siloxane blocks are of formula (7), specifically formula (7a), (7b), or (7c).

In a specific embodiment, the poly(carbonate-siloxane) elastomers can have 60 to 70 wt% of the polysiloxane blocks containing 30 to 50 diorganosiloxane repeat units, 30 to 40 wt% of the polysiloxane blocks where less than 10% of the carbonate linkages formed by the carbonate precursor are between the siloxane blocks as determined by ¹³C NMR, at least 30% elongation before yield as measured by ASTM D638, and a Shore D hardness of 5 to 20 as measured by ASTM D2240. Suitable poly(carbonate-siloxane) elastomers are described, for example, in US 8,466,249, and include the poly(carbonate-siloxane-ester)s described therein. Thus, the copolymer can further comprise polyester linkages made from C₆₋₅₀ aromatic or aliphatic carboxylic acids (or their derivatives such as salts or acid halides), in particular terephthalic acid, phthalic acid, or a combination thereof. In some embodiments the poly(carbonate-siloxane) elastomers have uncapped hydroxyl (-OH) end groups of less than 100 ppm.

The poly(carbonate-siloxane) elastomers can have a residual chloride content less than 10 parts by weight per million parts by weight of the elastomer (ppm), a free bisphenol content below 200 ppm, a residual iron content below 5 ppm, or less than 300 ppm of residual organic solvent, e.g., methylene chloride, chloroform, chlorobenzene, dichlorobenzene, toluene, xylene or a combination comprising at least one of the foregoing.

The poly(carbonate-siloxane) elastomers can be used alone or in combination with one or more other polymers. For example, the poly(carbonate-siloxane) elastomers can be combined with other elastomers, for example natural and synthetic rubbers such as linear low density polyethylenes, poly(ethylene-propylene), styrene-butadiene rubber, polybutadiene, poly(butyl acrylate), and silicone rubbers. Alternatively, or in addition, poly(carbonate-siloxane) elastomers can be combined with thermoplastic polymers such as polyamides, polyaramides, polycarbonates, polyesters, polyimides (including polyetherimides), polystyrenes, and polyurethanes. The relative amount of the poly(carbonate-siloxane) elastomers, other elastomer, or other polymer will depend on the particular properties desired and the end use of the composition. In an embodiment, the ratio of poly(carbonate-siloxane) elastomer to other elastomer or other polymer (or both) can be 10:90 to 99:1, or 50:50 to 99:1.

Optional additives can be used together with poly(carbonate-siloxane) elastomer. These include, for example, a filler; carbon black (which can be used as a pigment); TiO₂ (which can be used as a whitening agent or filler); optical brighteners; surfactants; processing aids. In an embodiment, a filler is used. The filler can be used to adjust the density of the composition containing the poly(carbonate-siloxane) elastomer. Exemplary fillers include talc, clay, TiO₂, barite, glass beads, glass flakes, milled glass, and fiberglass. In other embodiments the poly(carbonate-siloxane) elastomer can be modified with a powdered metal or metal oxide, for example tungsten or iron oxides, to increase density. The amount of filler will depend on the particular properties desired and the end use of the composition. For example, the filler can be absent, or present in an amount of 10 to 100 parts by weight of the other components, or 60 parts per 100 parts by weight of the other components. Small particle size fillers, for example less than 5 micron diameters are preferred for higher elongation. In some embodiments the TiO₂ can be encapsulated by an inorganic shell comprising silica, alumina, silica alumina, or a mixture thereof. The inorganic shell can be further passivated with a silicon compound, for example a silane (Si--H functionality) or an alkoxy silane compound or a mixture thereof. Passivation will produce less chemical reaction/degradation with the molten poly(carbonate-siloxane) elastomer. The TiO₂ can have a particle size from 0.05 to 10 micrometers, or from 0.1 to 1.0 micrometers.

In other embodiments the poly(carbonate-siloxane) elastomer can comprise stabilizers for improved thermal and/or photochemical stability. Such stabilizers can comprise phosphorous-containing compounds such as phosphites and phosphonites, or hindered phenolic compounds used alone or in combination. Examples of antioxidants include, but are not limited to, hindered phenols such as tetrakis[methylene(3,5-di-t-butyl-4-hydroxyhydrocinnamate)]-methane, 4,4'-thiobis(2-methyl-6-tert-butylphenol), and thiodiethylene bis(3,5-di-tert-butyl-4-hydroxy)hydrocinnamate, octadecyl-3(3.5-di-tert.butyl-4-hydroxyphenyl)propionate, pentaerythritol tetrakis(3(3.5-di-tert.butyl-4-hydroxyphenyl)propionate), phosphites and phosphonites such as tris(2,4-di-tert-butylphenyl)phosphite, and thio compounds such as dilauryl thiodipropionate, dimyristyl thiodipropionate, and distearyl thiodipropionate, or a combination containing at least one of the foregoing. UV photochemical stabilizers include benzotriazoles and benzoxazinones. Benzotriazole UV absorbers are commercially available, for example TINUVIN 234, MIXXIM BB/200 and CYASORB 5411. Other suitable UV absorbers are described in US5907025. UV absorbers are used at any effective concentration generally from 0.1 to 5.0 wt% of the entire mixture.

In some embodiments addition of acid and base to the resin formulation should be avoided as they may cause unfavorable chemical reactions/degradation of the polycarbonate and/or silicone polymer segments, for example at melt processing temperature. In some embodiments beneficial additives have pH in water of from 6.0 to 8.0.

The poly(carbonate-siloxane) elastomer can be transparent and can be combined with various colorants including colored flakes and the like to give objects with fluorescent, phosphorescent, reflective, and sparkle appearance. Pigments and dyes that change color at different temperatures may also be used in combination with the elastomer.

The compositions comprising the poly(carbonate-siloxane) elastomers can be used in any form, for example an injection molded solid, a film, or a foam. Foams can be open or closed cell. The compositions comprising the poly(carbonate-siloxane) elastomers can be used in articles for a wide variety of sports. For example, the poly(carbonate-siloxane) elastomer compositions can be used in balls for sports such as soccer, football, baseball, softball, squash, racquetball, tennis, handball, basketball, volleyball, cricket, field hockey, lacrosse, and golf. The elastomers are useful in the manufacture of other articles, such as racquets and grips, bats, hockey sticks, hockey pucks, golf clubs, surfboards, diving boards, vaulting poles, and archery bow components. Each of these items benefits from use of elastomers that have a demanding combination of properties, including a high elongation before yield and other desirable mechanical properties.

In some embodiments a poly(carbonate-siloxane) elastomer foam has a moderate density reduction from the original density of the resin of from 10 to 30 wt%. In other embodiments the foam can be much lighter, with a density reduction of from 50 to 90%. Foam density and cell structure can be optimized to the particular needs of the sports article being formed. Poly(carbonate-siloxane) elastomer foams may be preferred for footwear for lighter weight.

Particularly when combined with another elastomer, the poly(carbonate-siloxane) elastomers are useful in the manufacture of more rigid sports articles for example racquets (e.g., racquet handles), bats, mallets, hockey sticks, hockey pucks, golf clubs, and surfboards. In some embodiments the article is a rigid sports article having a hollow inner portion that can be filled with the thermoplastic poly(carbonate-siloxane) elastomer. For example, a tennis racket frame or handle comprising a fiberglass-filled plastic exterior can comprise a poly(carbonate-siloxane) elastomer interior. Another such sports article can be a golf club in which the shaft or head, or both, are hollow with at least a portion of the interior comprising the poly(carbonate-siloxane) elastomer. In other embodiments the sports article can be a hockey stick, baseball or cricket bat, a mallet, snowboard, or skis with at least a portion of the interior comprising a poly(carbonate-siloxane) elastomer. In yet other embodiments the rigid exterior can comprise a metal or plastic having a thickness of 1 to 30 millimeters, for example.

As described above, the poly(carbonate-siloxane) elastomers have a low Tg segment, and can have a low Tg overall, making them especially useful in cold weather sports equipment, for example in skis, ski poles, ski trail markers, snowboards, ice skates, ski boots, ski goggles, hockey sticks, hockey pucks, snow shoes, and cold weather equipment fasteners.

The poly(carbonate-siloxane) elastomer can be used alone or in combination with other elastomers and energy and vibration management materials to make a sport article. For example, the poly(carbonate-siloxane) elastomer can be used as a component of a wrap or a tape, or of an athletic glove such as a baseball mitt, a cycling glove, for shock or vibration management. In other embodiments the sports equipment comprising a poly(carbonate-siloxane) elastomer copolymer is safety equipment such as helmets, chest protectors, shin guards, cups, knee pads, and shoulder pads. The poly(carbonate-siloxane) elastomer can be used in combination with one or more other layers, for example a fabric layer or other elastomer layer. In some embodiments the safety equipment article comprises a hard outer shell with an inner layer or core of the poly(carbonate-siloxane) elastomer. Another layer, for example a fabric layer or a different elastomer lay can be disposed on a side of the poly(carbonate-siloxane) elastomer opposite the hard layer. In other embodiments a poly(carbonate-siloxane) elastomer foam can be used. Such a foam can have a density reduction of 20 to 80% of the original elastomer weight.

In other embodiments the poly(carbonate-siloxane) elastomer can be used to make footwear, for example soles or supports of sneakers, boots, athletics shoes, walking and running shoes. The poly(carbonate-siloxane) elastomer can be a particularly advantageous component in shoes for sports that involve jumping, such as volleyball and basketball. The nonslip "grippy" nature of the poly(carbonate-siloxane) elastomer can make it useful for the soles of footwear used in sports such as tennis and basketball where the player must make abrupt changes in direction at high speed on a hard smooth surface without loss of traction. The shoe, or a component thereof, can be made of solid or foamed poly(carbonate-siloxane) elastomer and can be formed by any suitable method, for example compression molding, injection molding, additive manufacturing, or 3D printing. In some embodiments the sole of the shoe can contain a hollow portion. In other embodiments the hollow structure comprises a bladder or hollow structure with a poly(carbonate-siloxane) elastomer skin. In some embodiments the skin can be from 0.5 to 5 mm thick.

In a specific embodiment, the thermoplastic poly(carbonate-siloxane) elastomer or a composition comprising the elastomer is used in the manufacture of dual- or multi-piece golf balls having a solid core of at least one layer and cover of at least one layer. The thermoplastic poly(carbonate-siloxane) elastomer is used to form at least one of the layers, particularly a core layer, or is used in admixture with other materials to make the core or any layer thereof.

In some embodiments, the ball contains a dual-core having an inner core and surrounding outer core layer or a multi-layered core having an inner core, intermediate core layer, and outer core layer. In some embodiments the poly(carbonate-siloxane) elastomer with greater than 50 wt% siloxane content is used in any of the inner cores. A lower modulus, higher siloxane content (55 to 75 wt%) elastomer can be used in some applications for a core structure(s) with superior properties. In some embodiments the resulting ball has high resiliency and rebounding properties. The poly(carbonate-siloxane) elastomer copolymer can be melt processed giving superior performance to traditional core materials or inner layer materials such as natural or synthetic rubber, styrene-butadiene rubber, polybutadiene, poly(butyl acrylate), silicone rubber, or copolymers and combinations thereof.

The core and cover can be single or multi-layered. Intermediate layers can be disposed between the core and cover layers to form three-piece, four-piece, and five-piece balls. Improved ball performance can be observed as one or more of the following: faster rebound, retention of more total energy when struck, and longer flight distance. For example a golf ball comprising a poly(carbonate-siloxane) elastomer with greater than 100% elastic recovery (for example as described in US 8,466,249) can have, in some embodiments, a higher ratio of rebound velocity compared to initial incoming velocity than a ball comprising traditional materials.

The coefficient of restitution ("COR") is a measure of the ratio of the relative velocity of the golf ball after direct impact with a hard surface to the relative velocity before impact with the hard surface. The COR may vary from 0 to 1, with 1 equivalent to a completely elastic collision and 0 equivalent to a completely inelastic collision. A golf ball having a COR value closer to 1 will generally correspond to a golf ball having a higher initial velocity and a greater overall distance when struck by a golf club. One test device commonly used in the golf ball industry for determining COR is the Ball Durability System made by Automated Design Corporation. Alternatively,COR can be measured using a drop test as described in Haron, A. and Ismail, K.A., "Coefficient of restitution of sports balls: A normal drop test", 1st International Conference on Mechanical Engineering Research, IPO Conf. Series: Materials Science and Engineering, Volume 36 (2012) 012038, conference 1.

A golf ball can have different COR values at different initial velocities and temperatures. Inclusion of the poly(carbonate-siloxane) elastomer in a golf ball can be especially beneficial for raising COR at lower temperatures, for example below 10°C.

The United States Golf Association (USGA) sets limits on the initial velocity of the ball. One objective of golf ball manufacturers is to maximize COR while maintaining compliance with these regulations. Balls with a higher rebound velocity have a higher COR value. In some embodiments the ball can have a COR of 0.50 to 0.90. In other embodiments the COR can be 0.83 or less.

In other embodiments a core comprising a poly(carbonate-siloxane) elastomer can provide a ball with good flight distance along and a comfortable soft feel.

In other embodiments a poly(carbonate-siloxane) elastomer foam can be used for at least a portion of the core of the golf ball. Such a foam can have a density reduction of 5 to 80% of the original elastomer weight. Foams can be open or closed cell.

In yet other embodiments the core comprising an elastic poly(carbonate-siloxane) elastomer can be covered by, or otherwise comprise an ionomeric polyolefin for example as described in US 9,636,546; 7,357,736 and 7,211,008. Ionomeric polyolefin covers are often used for superior cut resistance. In other embodiments the outer cover of the golf ball comprises a polyurethane often imparting superior grip and spin to the resultant ball when struck by a golf club.

In some embodiments the core and mantles contain a filler to adjust a density of the ball to 1.14 grams/cubic centimeter (gm/cc) or higher. Preferably the filler a density of about 4 gm/cc or greater. The filler can be present in an amount to adjust the density of the core to about 1.18-1.22 gm/cc. The amount of filler can be adjusted to produce a core with a density varying from the 1.18 gm/cc depending on the diameter of the core and the thickness and composition of the cover to produce a golf ball meeting the weight limits (45 grams) set by the professional golfers' governing authority (e.g. USGA). The amount of filler employed in the core and mantles can be varied from 0 to 60 parts per hundred parts by weight of the composition depending on the size (thickness) of the components and the desired location of the weight in the ball, provided that the final ball meets the required weight limits. The filler can be used in the core and not in the mantle, in the mantle and not in the core, or in both.

The optional filler component of the subject invention is chosen to impart additional density to blends of the previously described components, the selection being dependent upon the intended use of the composition (e.g. the type of golf ball desired (i.e., one-piece, two-piece, three-piece or intermediate layer). Examples of useful fillers include zinc oxide, barium sulfate, lead silicate, tungsten carbide, tin oxides, iron oxides as well as the other known corresponding salts and oxides thereof. It is preferred that the filler materials be non-reactive or almost non-reactive with the elastomer or other components described above.

The invention is further illustrated by the following examples, which are not intended to limit the claims.

### EXAMPLES

The following conversions can be used: 1 inch = 2.54 cm; temperature in °C = ((temperature in °F) - 32) × 5/9.

### Example 1

A solid 2-inch diameter ball of a 60 wt% poly(carbonate-siloxane) elastomer with an average dimethylsiloxane block length of 45 (D45) and a weight average molecular weight (Mw) of 31,000 Da was dropped from a height of 72 inches onto a concrete floor. The ball was at 20°C. It rebounded off the floor to a height of 50 inches, a recovery of 69.4%. The 0.694 rebound recovery was the average of 10 repetitions of the same sample.

The poly(carbonate-siloxane) elastomer had about 100% elastic recovery; that is an 80 mm long cylindrical strand of 3 mm diameter was stretched to at least twice its original length (160 mm) and snapped back to about its original size.

The poly(carbonate-siloxane) elastomer also had 0.1 wt% of a triaryl phosphite stabilizer, tris di-t-butyl phenyl phosphite.

### Example 2

The solid 2-inch diameter ball of Example 1, a 60 wt% poly(carbonate-siloxane) elastomer with an average dimethylsiloxane block length of 45 (D45) and an Mw of 31,000 Da was stored in a refrigerator at 7°C for 15 hours and dropped from a height of 72 inches onto a concrete floor. It rebounded off the floor to a height of 51 inches, a recovery of 70.8%. The low temperature did not significantly impair the rebound recovery.

### Example 3

A solid 2-inch diameter ball of a 60 wt% poly(carbonate-siloxane) elastomer with an average silicone block length of 45 (D45) and an Mw of 31,000 Da was stored in ice water at 0°C for 15 hours and dropped from a height of 72 inches onto a concrete floor. It rebounded off the floor to a height of 50 inches, a recovery of 69.4%. The very low temperature did not significantly impair the rebound recovery.

### Example 4

A white solid 2-inch diameter ball made from a blend of 70 wt% of a poly(carbonate-siloxane) elastomer and 30 wt% titanium dioxide was dropped from a height of 72 inches onto a concrete floor. The ball was at 20°C. It rebounded off the floor to a height of 44 inches, a recovery of 61.1%.

The high loading of mineral oxide did not significantly impair the rebound recovery. The poly(carbonate-siloxane) elastomer had 60 wt% dimethylsiloxane with an average silicone block length of 45 (D45) and an Mw of 31,000 Da. The titanium dioxide was encapsulated in a silica shell that was passivated with a silane fluid and had an average particle size of 0.5 micrometers. The elastomer also had 0.1 wt% of a triaryl phosphite stabilizer, tris dit-butyl phenyl phosphite.

The 70:30 poly(carbonate-siloxane) elastomer:titanium dioxide blend had over 100% elastic recovery; that is an 80 millimeter (mm) long cylindrical strand of 3 mm diameter was stretched to at least twice its original length (160 mm) and snapped back to about its original size.

### Example 5

One hundred twelve grams of a 60 wt% D45 silicone BPA polycarbonate elastomer pellets were placed in a small flat bottomed aluminum pie pan in a forced air oven at 250 °C for 2 hr. The molten resin was cooled and removed from the pan forming a clear round slab 0.75 in. thick with a flat top and flat bottom having a top diameter of 3.75 in. and a lower diameter of 3.0 in.

This tapered puck was placed on a FORMICA laminate table top with the small side in contact with the table and a force was exerted by hand at an angle of about 30 degrees on the puck. The puck did not slide or otherwise move across the table. It was firmly adhered to the surface even at the limit of the strength of the person pushing on the poly(carbonate-siloxane) elastomer puck. When the force was removed the puck could be easily lifted from the table surface. There was no marring or marking of the surface or deformation of the puck. The 60% D45 poly(carbonate-siloxane) elastomer had a very high degree of grip when force was applied. Similar grip strength was observed in testing on vinyl, wood, and concrete flooring.

A control experiment was done in a similar manner using a slab of a non-elastomeric rigid BPA polycarbonate silicone copolymer with 5 wt% of a D45 siloxane (LEXAN EXL1414T from SABIC). Similar to the 60% poly(carbonate-siloxane) elastomer, the 5% poly(carbonate-siloxane) elastomer was clear, however with the same applied force it slid across the table and other surfaces with no grip or adhesion.

### Example 6. Polymerization

Polymerization reactions to prepare the poly(carbonate-siloxane) elastomer were performed using a reactor system with a tubular reactor for preparation / introduction of the bis-chloroformate of D45 eugenol capped siloxane. A representative reaction description is given for an optimized 60% D45 siloxane copolycarbonate batch.

To the stirred formulation tank was added dichloromethane (8 L), DI water (7 L), bisphenol-A (1200 g, 5.3 moles), p-cumylphenol (59 g, 0.28 mole), triethylamine (30 g, 0.30 mole) and sodium gluconate (10 g). The mixture was transferred to the batch reactor. The reactor agitator was started and circulation flow was set at 80 L/min. Phosgene flow to the reactor was initiated (segment 1: 10 g, 15 g/min rate). A pH target of 9.5 was maintained throughout the batch by the DCS controlled addition of 33 % aqueous sodium hydroxide. After 10 g phosgene addition to the batch reactor the tubular reactor initiated to add D45 siloxane to the batch reactor (3300 g, 0.85 mole, 20 wt % solution in dichloromethane chilled to 50°F). The D45 flow rate to the tubular reactor was 1000 g/min (16 min addition cycle) with phosgene addition to the tubular reactor at 36 g/min (3.5 mol phosgene / mol D45) and 18 % aqueous sodium hydroxide flow to the tubular reactor at 403 g/min (5 mol NaOH / mol phosgene, chilled to 40°F). After completion of siloxane addition to the tubular reactor, it was flushed with dichloromethane (2 L) and DI (deionized) water (2 L). Phosgene flow continued to the batch reactor during the tubular reactor cycle (segment 2: 420 g, 15 g/min rate). Phosgene flow to the batch reactor was increased after completion of the tubular reactor until the end point (segment 3: 570 g, 50 g/min rate). The total phosgene addition time for all three segments was 40 minutes. A sample of the reactor was obtained and verified to be free of unreacted BPA and free of chloroformate. The Mw of the reaction sample was determined by GPC (Mw = 32,000). The reactor was purged with nitrogen then the batch was transferred to the centrifuge feed tank.

To the batch in the feed tank was added dilution dichloromethane (8 L) then the mixture was purified using a train of liquid-liquid centrifuges. Centrifuge one removed the brine phase. Centrifuge two removed the catalyst by extracting the resin solution with aqueous hydrochloric acid (pH 1). Additional centrifuges, three through eight removed, residual ions by extracting the resin solution with DI water. A sample of the resin solution was tested and verified less than 5 ppm each of ionic chloride and residual triethylamine.

The resin solution was transferred to the precipitation feed tank. The elastomer was isolated as a white powder by steam precipitation followed by drying in a cone shaped dryer using heated nitrogen (130°F). Powder yield 3130 g. Mw = 32.000. Further data on the poly(carbonate- siloxane) elastomer is shown in the Table below.

| Property | |
|---|---|
| wt% EE (Eugenol siloxane segments linked to each other) | 4.0 |
| Part Mw (PC standards) | 30588 |
| Part Mn (PC standards | 7840 |
| MVR 300°C, 6 min, 1.2 Kg cc/ 10 min. | 9.9 |
| | |
| Tg °C DMA Single Cantilever | 75.5 |
| Modulus MPa 41C DMA Single Cantilever | 16 |
| Modulus MPa 41C DMA Double Cantilever | 6 |
| CTE Flow (ppm/°C) | 104 |
| CTE x-Flow (ppm/°C | 206 |
| Shore D Hardness | 12 |
| Shore A Hardness | 67 |
| Density g/cc | 1.0563 |
| Static Contact Angle (pressed film) degrees | 101 |
| | |

| Tensile Testing | at 5 mm/min. |
|---|---|
| Modulus Elasticity (MPa) | 8 |
| Stress 5% strain (MPa) | 0.1 |
| Stress 10% strain | 0.6 |
| Stress 50% strain | 0.7 |
| Stress at break (MPa) | 2.5 |
| % Elongation (Break) no yield | 45 |
| Strain at Break (%) | 197 |

The year of each test method is the year in effect as of the earliest priority date of this application.

## Claims

1. A sports equipment article comprising a thermoplastic poly(carbonate-siloxane) elastomer, wherein the poly(carbonate-siloxane) elastomer comprises 50 to 90 weight percent of siloxane blocks, and the siloxane blocks comprise an average of 10 to 80 units.

2. The article of claim 1, wherein the article is a ball, preferably a golf ball.

3. The article of claim 1, wherein the article is a handle, a grip tape, a stick, a bat, a fishing pole, a puck, a surfboard, a ski, a racquet, a diving board, a boogie board, a ski pole, a ski trail marker, a snowboard, an ice skate, a ski boot, a ski goggle, an athletic glove, or a snow shoe.

4. The article of claim 1, wherein the article is a rigid sports article having a hollow inner portion at least partially filled with the thermoplastic poly(carbonate-siloxane) elastomer.

5. The article of claim 4, wherein the article is a tennis racquet frame or handle; a golf club handle, head, or shaft; a hockey stick; a fishing pole; a vaulting pole; a baseball, softball, or cricket bat; a mallet; a snowboard; surfboard; or a ski.

6. The article of claim 1, wherein the article is a shoe or any component of a shoe, preferably the article comprises a sole of an athletic shoe.

7. The article of claim 1, wherein the article is a safety equipment article, preferably a helmet, chest protector, shin guard, cup, knee pad, or shoulder pad.

8. The article of any one of claims 1 to 7, wherein the thermoplastic poly(carbonate-siloxane) elastomer is in the form of a foam or a layer.

9. The article of claim 1, comprising 60 to 80 weight percent of the siloxane blocks, and the siloxane blocks comprise an average of 10 to 50 units.

10. The article of any one of claims 1 to 9, wherein the poly(carbonate-siloxane) elastomer comprises blocks of carbonate units derived from bisphenol A and blocks of dimethylsiloxane units.

11. The article of any one of claims 1 to 10, wherein the poly(carbonate-siloxane) elastomer comprising siloxane blocks can have a glass transition temperature of minus 130 to minus 50°C, and polycarbonate blocks having a glass transition temperature greater than 70°C, as determined by dynamic mechanical analysis.

12. The article of any one of claims 1 to 11, wherein the poly(carbonate-siloxane) elastomer has a weight average molecular weight of 10,000 to 100,000 Daltons, as measured by gel permeation chromatography using polycarbonate standards.

13. The article of any one of claims 1 to 12, wherein the poly(carbonate-siloxane) elastomer has at least 30% elongation before yield as measured by ASTM D638, and a Shore D hardness of 5 to 20 as measured by ASTM D2240.

14. The article of any one of claims 1 to 13, further comprising 0.1 to 50 wt% of a metal oxide.

15. The article of claim 14 wherein the metal oxide comprises a titanium dioxide having an average particle size of 0.05 to 5.0 microns and is encapsulated in a silica, alumina, or silica alumina shell that has been passivated with a silicone compound.

## Patentansprüche

1. Sportausrüstungsartikel, umfassend ein thermoplastisches Poly(carbonat-Siloxan)-Elastomer, wobei das Poly(carbonat-siloxan)-Elastomer 50 bis 90 Gewichtsprozent Siloxanblöcke enthält und die Siloxanblöcke durchschnittlich 10 bis 80 Einheiten umfassen.

2. Artikel nach Anspruch 1, wobei der Artikel ein Ball, vorzugsweise ein Golfball, ist.

3. Artikel nach Anspruch 1, wobei es sich bei dem Artikel um einen Griff, ein Griffband, einen Stock, einen Schläger, eine Angelrute, einen Puck, ein Surfboard, einen Ski, einen Schläger, ein Sprungbrett, ein Boogie Board, einen Skistock, einen Skiwegweiser, ein Snowboard, einen Eislaufschuh, einen Skischuh, eine Skibrille, einen Sport-Handschuh oder einen Schneeschuh handelt.

4. Artikel nach Anspruch 1, wobei der Artikel ein starrer Sportartikel ist, der einen hohlen Innenteil besitzt, der zumindest teilweise mit dem thermoplastischen Poly(carbonat-siloxan)-Elastomer gefüllt ist.

5. Artikel nach Anspruch 4, wobei es sich bei dem Artikel um einen Tennis-Schlägerrahmen oder -griff; einen Golf-Schlägergriff, -kopf oder -schaft; einen Hockeyschläger; eine Angelrute; eine Sprungstange; einen Baseball-, Softball- oder Cricket-Schläger; einen Hammer; ein Snowboard; Surfboard; oder einen Ski handelt.

6. Artikel nach Anspruch 1, wobei der Artikel ein Schuh oder eine Komponente eines Schuhs ist, wobei vorzugsweise der Artikel aus einer Sohle eines Sportschuhs besteht.

7. Artikel nach Anspruch 1, wobei der Artikel ein Sicherheitsausrüstungsartikel ist, vorzugsweise ein Helm, ein Brustschutz, ein Schienbeinschoner, eine Schale, ein Knieschoner oder ein Schulterpolster.

8. Artikel nach einem der Ansprüche 1 bis 7, wobei das thermoplastische Poly(carbonat-siloxan)-Elastomer in Form eines Schaums oder einer Schicht vorliegt.

9. Artikel nach Anspruch 1, umfassend 60 bis 80 Gewichtsprozent der Siloxanblöcke, und die Siloxanblöcke umfassen durchschnittlich 10 bis 50 Einheiten.

10. Artikel nach einem der Ansprüche 1 bis 9, wobei das Poly(carbonat-siloxan)-Elastomer Blöcke aus von Bisphenol A abgeleiteten Carbonateinheiten und Blöcke aus Dimethylsiloxaneinheiten umfasst.

11. Artikel nach einem der Ansprüche 1 bis 10, wobei das Poly(carbonat-siloxan)-Elastomer, das Siloxanblöcke umfasst, eine Glasübergangstemperatur von minus 130 bis minus 50 °C haben kann, und die Polycarbonatblöcke eine Glasübergangstemperatur von mehr als 70 °C haben, wie durch eine dynamische mechanische Analyse bestimmt.

12. Artikel nach einem der Ansprüche 1 bis 11, wobei das Poly(carbonat-siloxan)-Elastomer ein durchschnittliches Molekulargewicht von 10.000 bis 100.000 Dalton aufweist, gemessen durch Gelpermeationschromatographie unter Verwendung von Polycarbonatstandards.

13. Artikel nach einem der Ansprüche 1 bis 12, wobei das Poly(carbonat-siloxan)-Elastomer eine Dehnung von mindestens 30 % vor der Streckung, gemessen nach ASTM D638, und eine Shore-D-Härte von 5 bis 20, gemessen nach ASTM D2240, aufweist.

14. Artikel nach einem der Ansprüche 1 bis 13, umfassend zusätzlich 0,1 bis 50 Gewichtsprozent eines Metalloxids.

15. Artikel nach Anspruch 14, wobei das Metalloxid ein Titandioxid mit einer durchschnittlichen Teilchengröße von 0,05 bis 5,0 Mikrometern umfasst und in einer Siliziumdioxid-, Aluminiumoxid- oder Siliziumdioxid-Aluminiumoxid-Hülle eingekapselt ist, die mit einer Silikonverbindung passiviert worden ist.

## Revendications

1. Article d'équipement sportif comprenant un élastomère thermoplastique poly(carbonate-siloxane), dans lequel l'élastomère poly(carbonate-siloxane) comprend 50 à 90 % en poids de blocs de siloxane, et les blocs de siloxane comprennent une moyenne de 10 à 80 unités.

2. Article selon la revendication 1, dans lequel l'article est une balle, de préférence une balle de golf.

3. Article selon la revendication 1, dans lequel l'article est une poignée, une bande antidérapante, un bâton, une batte, une canne à pêche, un palet, une planche de surf, un ski, une raquette, un plongeoir, un bodyboard, un bâton de ski, une balise de piste de ski, un snowboard, un patin à glace, une chaussure de ski, un masque de ski, un gant de sport ou une chaussure de neige.

4. Article selon la revendication 1, dans lequel l'article est un article de sport rigide ayant une partie intérieure creuse au moins partiellement remplie de l'élastomère thermoplastique poly(carbonate-siloxane).

5. Article selon la revendication 4, dans lequel l'article est un cadre ou un manche de raquette de tennis ; une poignée, une tête ou un manche de club de golf ; une crosse de hockey ; une canne à pêche ; une perche de saut ; une batte de base-ball, de softball ou de cricket ; un maillet ; un snowboard ; une planche de surf ; ou un ski.

6. Article selon la revendication 1, dans lequel l'article est une chaussure ou tout composant d'une chaussure, de préférence l'article comprend une semelle d'une chaussure de sport.

7. Article selon la revendication 1, dans lequel l'article est un article d'équipement de sécurité, de préférence un casque, un protège-poitrine, un protège-tibia, une coquille, une genouillère ou une épaulière.

8. Article selon l'une quelconque des revendications 1 à 7, dans lequel l'élastomère thermoplastique poly(carbonate-siloxane) se présente sous la forme d'une mousse ou d'une couche.

9. Article selon la revendication 1, comprenant 60 à 80 % en poids de blocs de siloxane, et les blocs de siloxane comprennent une moyenne de 10 à 50 unités.

10. Article selon l'une quelconque des revendications 1 à 9, dans lequel l'élastomère poly(carbonate-siloxane) comprend des blocs d'unités de carbonate dérivées du bisphénol A et des blocs d'unités de diméthylsiloxane.

11. Article selon l'une des revendications 1 à 10, dans lequel l'élastomère poly(carbonate-siloxane) comprenant des blocs de siloxane peut avoir une température de transition vitreuse de moins 130 à moins 50 °C, et des blocs de polycarbonate ayant une température de transition vitreuse supérieure à 70°C, telle que déterminée par analyse mécanique dynamique.

12. Article selon l'une quelconque des revendications 1 à 11, dans lequel l'élastomère poly(carbonate-siloxane) a une masse moléculaire moyenne en poids de 10 000 à 100 000 daltons, mesurée par chromatographie par perméation de gel à l'aide d'étalons de polycarbonate.

13. Article selon l'une quelconque des revendications 1 à 12, dans lequel l'élastomère poly(carbonate-siloxane) présente un allongement avant rupture d'au moins 30 %, mesuré selon la norme ASTM D638, et une dureté Shore D de 5 à 20, mesurée selon la norme ASTM D2240.

14. Article selon l'une quelconque des revendications 1 à 13, comprenant en outre 0,1 à 50 % en poids d'un oxyde métallique.

15. Article selon la revendication 14, dans lequel l'oxyde métallique comprend un dioxyde de titane qui a une taille moyenne de particule de 0,05 à 5,0 microns et qui est encapsulé dans une coquille de silice, d'alumine ou de silice-alumine qui a été passivée avec un composé de silicone.
